Europäisches Patentamt

**European Patent Office**

**Office européen des brevets**

(19)

(11) Numéro de publication: **0 148 067**

**A2**

(12)

# DEMANDE DE BREVET EUROPEEN

(21) Numéro de dépôt: **84402563.5**

(22) Date de dépôt: **12.12.84**

(51) Int. Cl.⁴: **F 42 B 13/50**
**C 08 L 27/06**

(30) Priorité: **12.12.83 FR 8319853**

(43) Date de publication de la demande:
**10.07.85 Bulletin 85/28**

(84) Etats contractants désignés:
**AT BE CH DE GB IT LI LU NL SE**

(71) Demandeur: **SOCIETE FRANCAISE D'EXTRUSION ET DE CALANDRAGE
Zone Industrielle
F-02400 Chateau Thierry(FR)**

(72) Inventeur: **Avisse, Bernard
44 rue Madrigal
F 02400 Chateau Thierry(DE)**

(72) Inventeur: **Toussaint, Jacques
89 ter, Boulevard Michelet
F 93130 Noisy-le-Sec(FR)**

(74) Mandataire: **Lepeudry-Gautherat, Thérèse et al,
Cabinet Armengaud Jeune Casanova, Akerman,
Lepeudry 23 boulevard de Strasbourg
F-75010 Paris(FR)**

(54) Procédé pour plastifier des mélanges base de résine de polychlorure de vinyle.

(57) Procédé pour plastifier des mélanges à base de résine de polychlorure de vinyle.

Ce procédé comprend les étapes suivantes:

a) mélanger ladite résine avec des plastifiants;

b) refroidir le mélange et y introduire simultanément sous agitation des constituants solides.

Application dans la maroquinerie et la papeterie.

EP 0 148 067 A2

Croydon Printing Company Ltd

La présente invention est relative à un procédé pour plastifier des mélanges à base de résine de polychlorure de vinyle ; les produits ainsi obtenus trouvent en particulier une application dans la maroquinerie et la papeterie.

Le terme résine doit être compris comme signifiant aussi bien une résine qu'un mélange de résines de polychlorure de vinyle.

A l'heure actuelle, la production de tels articles est obtenue en mélangeant dans une même cuve les différents constituants qui y sont introduits pour ainsi dire simultanément : la ou les résines de polychlorure de vinyle, les plastifiants, les adjuvants liquides et solides, les opacifiants et les colorants, dans des proportions qui sont fonction de la nature du produit final recherché. La dispersion des différents constituants notamment des plastifiants dans la résine est provoquée par l'auto-échauffement dû au brassage par l'hélice dont est munie la cuve de mélange. Lorsque la température du mélange atteint une température dite de consigne, le mélange est transféré dans une cuve de refroidissement avant d'être extrudé et calandré pour obtenir le produit semi-ouvré à partir duquel seront fabriqués les articles souhaités.

Un tel procédé présente un certain nombre d'inconvénients dont en particulier un coût important en énergie et une durée relativement importante. En outre, l'homogénéité du mélange n'est pas obligatoirement absolue.

Aussi, un des buts de la présente invention est-il de fournir un procédé de mélange qui permet de pallier ces inconvénients en réduisant le coût énergétique et en raccourcissant le temps de mélange.

Un autre but de la présente invention est de fournir un tel procédé qui permet de produire un mélange encore plus homogène et de qualité constante : ceci a notamment pour conséquence d'améliorer la qualité des produits finaux.

Un but supplémentaire de l'invention est de fournir un procédé de ce type dont les différents paramètres sont mieux contrôlés.

Ces buts ainsi que d'autres qui apparaîtront par la suite, sont atteints par un procédé pour plastifier des mélanges à partir de résine de polychlorure de vinyle, qui, selon la présente invention, comprend les étapes suivantes :

     a) mélanger cette résine avec des plastifiants ;

     b) refroidir ledit mélange et y introduire simultanément sous agitation des constituants solides.

Si des adjuvants liquides doivent être incorporés, ceux-ci sont introduits lors de l'étape a). Par contre, d'éventuels colorants sont introduits lors de l'étape b).

A l'issue de l'étape b), le produit obtenu est extrudé et calandré de façon connue en soi.

En effet, il est apparu de façon tout à fait inattendue , surprenante et remarquable que les buts ainsi énoncés ci-dessus sont atteints lorsque le mélange des différents constituants est réalisé en deux étapes : d'une part, le mélange de la résine avec des plastifiants et des adjuvants liquides éventuels, ce qui constitue l'étape a) du procédé selon la présente invention, et, d'autre part, lorsque ce mélange est en cours de refroidissement, l'introduction dans celui-ci sous agitation de tous les autres constituants, ce qui constitue l'étape b) de ce même procédé.

Ainsi on obtient, à l'issue de l'étape b), un produit dans lequel la résine est seule plastifiée et ce de façon homogène.

De plus lors de l'étape a) la dispersion des plastifiants est plus rapide, ce qui entraîne une économie de temps et, au cours de l'étape b), une économie d'énergie car la température à l'issue de l'étape a) étant plus basse que dans un procédé traditionnel, la quantité de chaleur à évacuer est plus faible.

Afin de mieux mettre en évidence les différents avantages de la présente invention, on a réalisé un essai comparatif entre le procédé traditionnel tel qu'exposé ci-dessus et le procédé selon la présente invention.

EXEMPLE N° 1. Procédé traditionnel

Dans une cuve de 500 litres équipée d'une hélice de brassage à vitesse variable, sont introduits la résine de polychlorure de vinyle, le plastifiant , des adjuvants solides liquides ainsi que des colorants. La proportion de plastifiants varie entre 15 et 55 % en poids par rapport à la quantité de résine. La charge totale de la cuve est de 230 kg ce qui représente un volume de 375 litres.

Après brassage, le mélange obtenu est transféré dans une cuve de refroidissement.

EXEMPLE N° 2. Procédé selon l'invention

Dans une même cuve de 500 litres qu'à l'exemple précédent, on introduit une charge de 225 kg représentant un volume d'environ 300 litres, comprenant la résine, le plastifiant  et les adjuvants liquides. Après brassage, le mélange est transféré dans une cuve de refroidissement munie d'un dispositif de brassage dans laquelle sont introduits tous les autres constituants : adjuvants solides et colorants.

Les résultats des deux exemples sont regroupés dans le tableau ci-après :

4

| item | Exemple 1 | Exemple 2 |
|---|---|---|
| **Cuve de mélange** (étape a)<br>Temps total des opérations<br>y compris vidange | 7,5 minutes | 4,5    minutes |
| T° finale | 105°C | 80°C |
| Charge | 230 kg | 225 kg |
| **Cuve de refroidissement**<br>(étape b) | | |
| Charge brassée | 230 kg | 305 kg |
| Température à la sortie | 35°C | 35°C |
| Temps total des opéra-<br>tions y compris vidange | 8 mn | 6 mn |
| Débit théorique | 890 kg/h | 1740 kg/h |

D'après ce tableau, on peut constater les nombreux et différents avantages que procure le procédé selon la présente invention. On notera notamment une amélioration de la productivité ainsi qu'une réduction sensible de l'énergie consommée.

Le procédé selon l'invention a pour conséquence de supprimer  l'opération de nettoyage de la cuve de mélange à chaque changement de qualité de mélange puisque seuls les adjuvants solides et colorants sont changés : seule la cuve de refroidissement doit être nettoyée.

REVENDICATIONS

1.- Procédé pour plastifier des mélanges à base de résine de polychlorure de vinyle, caractérisé par le fait qu'il comprend les étapes suivantes :

a) mélanger ladite résine avec des plastifiants ajoutés en une seule fois ;

b) refroidir ledit mélange et y introduire simultanément sous agitation des constituants solides.

2.- Procédé selon la revendication 1, caractérisé par le fait qu'à l'étape a) sont également introduits des adjuvants liquides.

3.- Procédé selon l'une quelconque revendication 1 ou 2, caractérisé par le fait qu'à l'étape b) sont également introduits des colorants.

4.- Procédé selon l'une quelconque des revendications 1 à 3, caractérisé par le fait que le produit issu de l'étape b) est extrudé et calandré.